# EUROPÄISCHE PATENTANMELDUNG

(11) **EP 2 741 080 A1**
(43) Veröffentlichungstag der Anmeldung: **11.06.2014**
(21) Anmeldenummer: 12405125.1
(22) Anmeldetag: 05.12.2012
(51) Int. Cl.: G01N 30/18, G01N 30/24

(54) **Vorrichtung sowie Verfahren zum Einspritzen eines Fluids in ein Analysegerät**

(71) Anmelder: CTC Analytics AG, 4222 Zwingen (CH)
(72) Erfinder: Stalder, Peter, 4232 Fehren/SO (CH); Lüthy, Lucas, 8053 Zürich/ZH (CH)
(74) Vertreter: Rüfenacht, Philipp Michael

(57) **Zusammenfassung**

Anordnung sowie Verfahren zum Einspritzen eines Fluids in ein Analysegerät (10), insbesondere einen Flüssigchromatographen mit einer Einspritzöffnung (11), insbesondere mit einem Einspritzventil. Die Anordnung umfasst eine Handhabungsvorrichtung (9) mit einer Einspritznadel (6) sowie eine Dichtung (2) aus einem Polymermaterial, insbesondere eine Ferrule, welche abnehmbar auf der Einspritzöffnung (11) angeordnet ist. Die Dichtung (2) weist in axialer Richtung eine Führungsbohrung (3) zur Aufnahme der Einspritznadel (6) auf. Die Führungsbohrung (3) ist derart ausgebildet, dass diese einen Absatz (4) mit einer Öffnung (22) umfasst, deren Durchmesser kleiner ist als ein Durchmesser in einem ersten Abschnitt (3.1) der Führungsbohrung (3), der sich vom Absatz (4) in Richtung eines ersten Endes (5) der Dichtung (2) hin erstreckt. Die Handhabungsvorrichtung (9) ist ferner derart ausgebildet, dass die Einspritznadel (6) vom ersten Ende (5) der Dichtung (2) her in die Führungsbohrung (3) eingeführt und deren vordere Rand (8) mit einer vorbestimmten, insbesondere konstanten Kraft auf den Absatz (4) gedrückt werden kann.

## Beschreibung

### Technisches Gebiet

Die Erfindung betrifft eine Anordnung sowie ein Verfahren zum Einspritzen eines Fluids in ein Analysegerät, insbesondere einem Flüssigchromatographen mit einer Einspritzöffnung, insbesondere mit einem Einspritzventil sowie ein Analysegerät mit einer derartigen Anordnung.

### Stand der Technik

Derartige Anordnungen und Verfahren sind im Stand der Technik bereits bekannt. Beispielsweise offenbart WO 2012/010222 (Agilent Technologies Inc.) einen biokompatiblen Einsatz für eine Fluideinheit, insbesondere für ein HPLC-Gerät. Der Einsatz verbindet eine Kapillare mit dem Eingang des HPLC-Geräts und verfügt über ein erstes Dichtelement mit einer ersten Kontaktfläche, die mit der Kapillare verbunden werden kann, sowie einer zweiten Kontaktfläche, welche mit dem Eingang des HPLC-Geräts verbunden werden kann. In einem Ausführungsbeispiel ist die erste Kontaktfläche derart ausgebildet, dass diese mit dem Vorderbereich der Kapillare verbunden ist, wobei die Vorderkante der Kapillare auf die erste Kontaktfläche gedrückt wird. Die erste Kontaktfläche erstreckt sich in lateraler Richtung vor der Vorderkante der Kapillare, wobei die erste Kontaktfläche beim Einführen der Kapillare in den Eingang des HPLC-Geräts eine Anschlagsfläche für die Kapillare bildet. Die erste Kontaktfläche kann aus einem biokompatiblen Kunststoff, insbesondere aus PEEK bestehen sowie entweder fest oder abnehmbar mit der Kapillare verbunden sein. Der Einsatz kann ferner über ein zweites Dichtelement verfügen, welches aus zwei in axialer Richtung übereinander liegenden Ferrulen besteht. Eine dieser Ferrulen kann eine Ringfeder aufweisen, weiche in axialer Richtung eine Kraft auf die Kapillare ausübt.

DE 10 2009 022 368 (Dionex Softron GmbH) beschreibt eine Steckereinheit für das verbinden von Kapiliaren, insbesondere für die Hochleistungsflüssigkeitschromatographie. Die Steckereinheit umfasst ein am Ende einer Steckerkapillare angeordnetes Dichtelement, welches die Steckerkapillare umgreift, wobei eine vordere Stirnfläche des Dichtelements mit der Stirnfläche der Steckerkapillare fluchtet. Das Dichtungselement wird in einem rückwärtigen Bereich von einem Druckstück umfasst und gegenüber axialen Bewegungen relativ zur Stecketkapillare fest verbunden. Durch die Kompression des Dichtelements in dessen vorderstem Bereich ergibt sich eine abdichtende Wirkung an der Stirnseite der Steckerkapillare, wobei sich zusätzlich auch in radialer Richtung eine abdichtende Wirkung gegenüber der Innenwandung der Kapillarenaufnahmeöffnung ergibt. Das Dichtelement kann elastisch ausgebildet sein, um im vorderen Bereich die Steckerkapillare mit Vorspannung zu umgreifen. Das Dichtelement wird über ein Basisteil mit dem Druckstück verbunden.

US 4,690,437 (Dionex Softron GmbH) offenbart ein Verbindungselement zum Verbinden einer Fluidleitung mit einem Fluideinlass eines Geräts oder einer weiteren Fluidleitung. Das Verbindungselement umfasst eine Ferrule aus einem deformierbaren Material, wobei diese an einem Ende über die Fluidleitung gestülpt werden und auf der anderen Seite auf einen Einlass aufgelegt werden kann. Ferner umfasst das Verbindungselement ein einschraubbares Befestigungselement mit einer axialen Bohrung, welche sich am vorderen Ende konisch erweitert um das hintere Ende der Ferrule umfassen zu können. Die Ferrule ist bevorzugt aus einem Plastik gefertigt, der eine gute Verträglichkeit mit Chemikalien aufweist.

WO 2011/076244 (Agilent Technologies Inc.) offenbart ein Verbindungselement für eine Fluidenheit, insbesondere für ein HPLC-Gerät. Das Verbindungselement verfügt über ein Rohr, bei dem am vorderen Ende ein Einsatz angebracht ist, der die Verbindung zwischen dem Rohr und dem Einfass der Fluideinheit abdichtet. Der Einsatz besteht vorzugsweise aus einem deformierbaren Polymer, insbesondere aus PEEK.

Nachteilig an diesen vorbekannten Anordnungen ist, dass zur Erreichung einer guten Dichtwirkung die Kapillaren mittels Schraubverbindungen mit einer genügend hohen Kraft in die Dichtungen gedrückt werden müssen. Dies verunmöglicht einerseits die Verwendung derartiger Dichtungen in automatischen Systemen, bei denen die Kapillaren z.B. durch einen verfahrbaren Arm ohne Einwirkung einer Bedienperson zur Einspritzöffnung eines Analysegeräts geführt werden. Ferner ist die Anwendung einer Schraubverbindung kritisch, da die auf die Kapillare ausgeübte Kraft nur grob eingestellt werden kann, was zu Undichtigkeiten der Verbindung oder zu Beschädigungen der Kapillare führen kann.

Im Zusammenhang mit automatischen Systemen werden ferner Dichtungsanordnungen verwendet, bei denen eine Kapillare durch eine axiale Öffnung einer Ferrule direkt an eine Einspritzöffnung eines Analysegeräts herangeführt wird, wobei durch die Ferrule eine seitliche Abdichtung der Kapillare erfolgt. Ein wesentlicher Nachteil derartiger Systeme ist jedoch, dass zwischen dem Ende der Ferrule und der Einspritzöffnung ein Totvolumen bestehen bleiben kann. Ein derartiges Totvolumen verfälscht nicht nur die Messungen bei quantitativen Analysen sondern kann auch zu Materialverschleppungen zwischen einzelnen Messungen führen.

### Darstellung der Erfindung

Aufgabe der Erfindung ist es, eine dem eingangs genannten technischen Gebiet zugehörende Anordnung zu schaffen, welche eine hohe Dichtwirkung ohne Totvolumen insbesondere bei automatischen Einspritzsystemen ermöglicht.

Die Lösung der Aufgabe ist durch die Merkmale des Anspruchs 1 definiert. Gemäss der Erfindung umfasst eine Anordnung zum Einspritzen eines Fluids in ein Analysegerät, insbesondere einen Flüssigchromatographen mit einer Einspritzöffnung, insbesondere mit einem Injektionsventil, eine Handhabungsvorrichtung mit einer Einspätznadel. Ferner weist die Anordnung eine Dichtung aus einem Polymermaterial, insbesondere eine Ferrule, auf, welche abnehmbar auf der Einspritzöffnung angeordnet ist. Die Dichtung verfügt in axialer Richtung über eine Führungsbohrung zur Aufnahme der Einspritznadel, wobei die Führungsbohrung derart ausgebildet ist, dass diese einen Absatz mit einer Öffnung umfasst. Der Durchmesser der Öffnung ist kleiner als ein Durchmesser in einem ersten Abschnitt der Führungsbohrung, der sich vom Absatz in Richtung eines ersten Endes der Dichtung hin erstreckt. Die Handhabungsvorrichtung weist Mittel auf, die geeignet sind, die Einspritznadel vom ersten Ende der Dichtung her in die Führungsbohrung einzuführen und der vordere Rand der Einspritznadel mit einer vorbestimmtenKraft auf den Absatz zu drücken.

Durch das Drücken der Einspritznadel mit einer vorbestimmten Kraft auf den Absatz wird am vorderen Ende der Einspritznadel eine hohe Dichtwirkung erreicht. Da am vorderen Ende der Einspritznadel abgedichtet wird, kann sich zwischen der Einspritznadel und der Einspritzöffnung kein Totvolumen bilden, welches zu einer Verfälschung einer quantitativen Messung oder zu einer Verschleppung von Material zwischen zwei Messungen führen könnte. Zudem kann die vorbestimmte Kraft derart gewählt werden, dass eine hohe Dichtwirkung erreicht wird, ohne dass die Einspritznadel oder die Dichtung durch eine zu grosse Krafteinwirkung beschädigt werden.

In der vorliegenden Anmeldung wird unter "Handhabungsvorrichtung" jedwede Vorrichtung verstanden, mit der eine Einspritznadel im Raum bewegt werden kann. Vorzugsweise erfolgt die Bewegung der Einspritznadel selbstständig, d.h. dass die Handhabungsvorrichtung über geeignete Antriebsmittel sowie einer Steuerung verfügt, die eine Bewegung der Einspritznadel ermöglicht. Alternativ kann die Handhabungsvorrichtung jedoch auch von Hand verstellbar sein. Insbesondere bevorzugt wird das Einführen der Einspritznadel in die Führungsbohrung sowie die Mittel, welche das Aufdrücken der Einspritznadel auf den Absatz mit der vorbestimmten Kraft ermöglichen mit derselben Steuerung, die auch die Handhabungsvorrichtung steuert, kontrolliert. Vorzugsweise lässt sich durch die Handhabungsvorrichtung die Einspritznadel zusätzlich über mindestens einen Probenbehälter positionieren, so dass eine zu analysierende Fluidprobe in die Einspritznadel aufgezogen werden kann.

Die Einspritznadel ist vorzugsweise fluidisch mit einer geeigneten Pumpvorrichtung verbunden, mit deren Hilfe das zu analysierende Fluid aus der Einspritznadel ausgestossen und/oder in diese aufgezogen werden kann. Besonders bevorzugt ist die Einspritznadel über eine Kanüle mit einer Kolbenspritze verbunden. Vorzugsweise ist zwischen der Einspritznadel und der Pumpvorrichtung eine Kanüle mit einem Volumen angeordnet, der dem zu analysierenden Fluidvolumen entspricht, damit eine Kontamination der Pumpvorrichtung durch die Fluidprobe verhindert wird. Vorzugsweise handelt es sich dabei um einen Probenloop, der das gesamte Volumen des zu analysierenden Fluids aufnehmen kann.

Um eine besonders gute Dichtwirkung zu erreichen, ist das vordere Ende der Einspritznadel vorzugsweise rechtwinklig geschnitten, d.h. der gesamte Umfang des Nadelendes liegt auf einer Ebene, die rechtwinklig zur Längsmittelachse der Einspritznadel steht. Alternativ sind andere Geometrien des Nadelendes denkbar, wobei eine gute Dichtwirkung nur erreicht werden kann, wenn der Absatz innerhalb der Führungsbohrung eine dem Nadelende angepasste Geometrie aufweist.

Die Einspritznadel ist vorzugsweise aus Stahl, insbesondere aus Edelstahl oder aus einer Stahllegierung hergestellt. Der Aussendurchmesser der Nadel liegt bevorzugt zwischen 0,2 mm und 2 mm, insbesondere bevorzugt zwischen 0,5 mm bis 0,8 mm, ganz besonders bevorzugt beträgt der Aussendurchmesser 0,72 mm. Je nach Anwendung sind jedoch auch Einspritznadeln mit grösseren Durchmessern einsetzbar. Der Innendurchmesser der Nadel beträgt vorzugsweise zwischen 0,1 mm und 0,6 mm, insbesondere bevorzugt von 0,2 mm bis 0,45 mm.

Die Dichtung umfasst vorzugsweise ein chemikalienbeständiges und/oder biokompatibles Polymermaterial. Derartige Dichtungen lassen sich relativ einfach und kostengünstig herstellen, wobei durch die Verwendung eines leicht elastischen Polymermaterials eine exzellente Dichtungswirkung erzielt wird, da Unebenheiten am vorderen Ende der Einspritznadel durch die elastische Eigenschaft des Materials ausgeglichen werden können.

Bevorzugt weist die Dichtung die Form einer Ferrule auf. Ferrulen sind einem Fachmann auf dem Gebiet der Chromatographie bekannt und weisen zumindest abschnittsweise eine konische Form auf. Ferner kann die Dichtung jedoch auch in der Form eines Zylinders oder eines beliebigen Polyeders vorliegen. Die axiale Führungsbohrung ist vorzugsweise punktsymmetrisch in der radialen Ebene der Dichtung angeordnet.

Der Absatz in der Führungsbohrung ist vorzugsweise rechtwinklig zur Innenwand der Führungsbohrung angeordnet. Insbesondere in Kombination mit einem rechtwinklig geschnittenen vorderen Ende der Einspritznadel ergibt sich dadurch eine besonders gute Dichtwirkung. Die Durchmesser der Öffnung und der Führungsbohrung weisen vorzugsweise einen Unterschied auf, der mindestens der doppelten Wandstärke der Einspritznadel entspricht, wobei die Öffnung konzentrisch innerhalb der Führungsbohrung angeordnet ist, Dadurch wird sichergestellt, dass die Einspritznadel an ihrem vorderen Ende über die gesamte Breite ihrer Seitenwand auf den Absatz gedrückt wird, so dass die Dichtwirkung maximiert wird. Dadurch wird auch erreicht, dass die Öffnung des Absatzes mit dem Lumen der in die Führungsbohrung eingeführten Einspritznadel übergangslos miteinander verbunden ist, wodurch Kontaminationen des Absatzes durch das Fluid verhindert werden. Zudem erlaubt dies das Einspritzen des Fluids in einer im Wesentlichen laminaren Strömung, da keinerlei Turbulenzen durch in die Fluidströmung hinausragende Kanten entstehen. Wenn mit der gleichen Dichtung Nadeln mit Lumen mit unterschiedlichen Durchmessern verwendet werden können, so sollte der Durchmesser der Öffnung derart gewählt werden, dass dieser gleich gross ist, wie der Durchschnitt der Lumendurchmesser der mit der Dichtung einsetzbaren Einspritznadeln. Dadurch kann ein guter Kompromiss zwischen Dichtwirkung und Strömunsverhalten des Fluids erreicht werden. Der Durchmesser der Öffnung beträgt in einer besonders bevorzugten Ausführung 0,35 mm.

Zur Erzeugung der vorbestimmten Kraft verfügt die Handhabungsvorrichtung über ein geeignetes Mittel zum Beaufschlagen der Einspritznadel mit der entsprechenden Kraft.

Als "vorbestimmte Kraft" wird im Rahmen dieser Anmeldung eine Kraft verstanden, welche zeitlich konstant ist oder welche in Abhängigkeit eines Parameters variabel ist. Besonders bevorzugt wird die Kraft in Abhängigkeit des Einspritzdrucks variabel geregelt, wobei für jeden Einspritzdruck eine bestimmte Kraft ausgeübt wird. Dies ermöglicht es, die ausgeübte Kraft an den Druckverlauf während des Einspritzens anzupassen, damit stets eine optimale Dichtwirkung erzielt wird. Die zu verwendende Kraft kann für jede eingesetzte Nadel im Voraus experimentell oder anhand von Simulationen bestimmt und in einer Steuerungseinheit für die Handhabungsvorrichtung gespeichert werden. Anhand einer Messung des Einspritzdrucks kann anschliessend die zu verwendende, optimale Kraft ausgelesen werden. Ferner kann die Kraft auch in Abhängigkeit von anderen Parametern, wie z.B. der Zeit, dem Einspritzvolumen, der Temperatur oder der Viskosität des Fluids geregelt werden.

Vorzugsweise besteht die Dichtung aus Polyetheretherketon (PEEK). Polyetheretherketon ist ein Thermoplast, der über eine gute Chemikalienbeständigkeit verfügt und überdies mechanisch äusserst stabil ist. Ferner ist Polyetheretherketon auch gut mit biologischen Proben kompatibel, so dass Dichtungen aus Polyetheretherketon für eine Vielzahl an unterschiedlichen Anwendungen verwendet werden können. Alternativ kann die Dichtung jedoch auch aus einem anderen chemikalienbeständigen Polymer, wie z.B. Polytretrafluorethylen (PTFE).

Bevorzugt weist der Durchmesser der Führungsbohrung im ersten Abschnitt einen konstanten Durchmesser auf, der im Wesentlichen einem Aussendurchmesser der Einspritznadel entspricht.

"Im Wesentlichen" bedeutet im Rahmen dieser Anmeldung, dass der Durchmesser der Führungsbohrung gerade gross genug ist, um ein Einführen der Einspritznadel zu ermöglichen, ohne dass dabei Spiel zwischen der Aussenwand der Einspritznadel und der Innenwand der Führungsbohrung besteht. Dadurch ist sichergestellt, dass die Einsprüznadel in der Führungsbohrung präzise geführt wird und dadurch eine optimale Positionierung des vorderen Endes der Einspritznadel auf dem Absatz erfolgt.

Alternativ kann der Durchmesser im ersten Abschnitt auch variieren, z.B. kann dieser zum Absatz hin kontinuierlich abnehmen oder der erste Abschnitt kann zwei Unterabschnitte mit unterschiedlichen Durchmessern aufweisen.

Vorzugsweise ist der Durchmesser der Führungsbohrung in einem zweiten Abschnitt, der sich vom Absatz bis zum zweiten Ende der Dichtung, welches bei einer Anordnung der Dichtung auf der Einspritzöffnung auf dieser aufliegt, erstreckt, kleiner als der Durchmesser der Führungsbohrung im ersten Abschnitt. Der Durchmesser im zweiten Abschnitt ist besonders bevorzugt gleich gross wie der Durchmesser der Öffnung.

Dadurch wird erreicht, dass möglichst keine Scherströmung zwischen der Öffnung und dem zweiten Abschnitt der Führungsbohrung entsteht, welche insbesondere beim Einspritzen eines Fluids mit grösseren Biomotekülen, wie Proteinen oder DNA-Strängen, zu Brüchen derselben führen könnte. Zudem ist der Absatz einer derartigen Dichtung wesentlich stabiler, da auf diesen einwirkende Kräfte auf das darunterliegende Material verteilt werden können. Dies eliminiert die Gefahr, dass während des Aufdrückens der Einspritznadel auf den Absatz dieser abbricht.

Alternativ kann jedoch der Durchmesser im zweiten Abschnitt grösser sein als der Durchmesser der Öffnung, insbesondere gleich gross wie der Durchmesser im ersten Abschnitt.

Vorzugsweise weist die Führungsbohrung im ersten Abschnitt einen Durchmesser von 0,2 mm bis 2,0 mm, bevorzugt von 0,5 mm bis 0,8 mm auf. Dadurch lassen sich in der Flüssig- und Gaschromatographie übliche Einsprüznadeln verwenden, was die Kompatibilität der Anordnung mit bestehenden Analysegeräten erhöht und die Kosten für Verbrauchsmaterial niedrig hält.

Weiter bevorzugt weist die Öffnung einen Durchmesser von 0,1 mm bis 1,8 mm, bevorzugt von 0,2 mm bis 0,6 mm auf. In Verbindung mit in der Flüssig- und Gaschromatographie üblichen Einspritznadeln ergibt sich dadurch ein Absatz, dessen Breite gross genug ist, um eine optimale Dichtwirkung mit dem vorderen Ende der Einspritznadel zu erzeugen. Ferner weisen handelsübliche Einspritznadeln Lumen mit derartigen Durchmessern auf, wodurch von der Einspritznadel über die Öffnung bis zur Einspritzöffnung des Analysegeräts eine durchgehende Fluidleitung mit einem konstanten Durchmesser erzeugt werden kann. Dadurch wird erreicht, dass ein mit einer erfindungsgemässen Vorrichtung in ein Analysegerät eingespritztes Fluid keinen grösseren turbulenten Strömungen oder Geschwindigkeitsänderungen unterworfen wird, wie dies bei einer Fluidleitung mit wechselnden Durchmessern der Fall ist.

Je nach Anwendung können die Durchmesser alternativ natürlich auch andere Werte aufweisen, insbesondere können diese grösser sein als die bevorzugten Werte.

Vorzugsweise sind die Mittel der Handhabungsvorrichtung derart ausgebildet, dass die Einspritznadel mit einer vorbestimmten, Kraft von 1 N bis 50 N, bevorzugt von 15 N bis 25 N auf den Absatz gedrückt werden kann.

Es hat sich herausgestellt, dass durch das Aufdrücken der Einspritznadel mit einer Kraft in diesem Bereich eine besonders hohe Dichtwirkung erreicht werden kann, ohne dass die Einspritznadel oder die Dichtung durch die Krafteinwirkung beschädigt werden.

Alternativ kann das vordere Ende der Einspritznadel auch mit höheren Kräften auf den Absatz gedrückt werden, wobei in einem solchen Fall die Einspritznadel entsprechend stabiler ausgebildet werden muss.

Bevorzugt sind die Mittel der Handhabungsvorrichtung als Antrieb ausgebildet, mit dem die Einspritznadel in einer ersten Raumrichtung, die parallel zur Führungsbohrung ist, bewegbar ist.

Durch diesen Antrieb lässt sich die Einspritznadel in die Führungsbohrung Ein- und wieder Ausführen. Besonders bevorzugt ist der Antrieb gleichzeitig derart ausgelegt, dass die Einspritznadel mit einer vorbestimmbaren, insbesondere konstanten Kraft beaufschlagt werden kann, um diese auf den Absatz zu drücken. Beim Antrieb kann es sich um einen elektrischen, pneumatischen, hydraulischen oder magnetischen Antrieb handeln. Die Verwendung eines Antriebs hat den Vorteil, dass sich je nach Anwendung der vorbestimmte Wert der Kraft relativ einfach einstellen lässt, ohne dass einzelne Teile der Handhabungsvorrichtung ausgewechselt werden müssen, wie dies bei der Verwendung eines Federelements der Fall wäre.

Eine derartige Handhabungsvorrichtung lässt sich insbesondere in Verbindung mit einem Karussell für Probeflaschen verwenden, wobei an einer Position auf dem Karussell anstatt einer Probeflasche eine Öffnung angeordnet ist, welche den Weg zur Injektionsöffnung eines Analysegeräts freigibt. Dadurch lässt sich eine Anordnung bereitstellen, welche mit einer einfachen Bewegung der Injektionsnadel in einer Raumrichtung auskommt und dank der Drehung des Karussells trotzdem eine Vielzahl an Proben automatisch in ein Analysegerät injizieren kann. Vorzugsweise verfügt das Karussell zudem über eine Position, bei der die Injektionsnadel gespült werden kann, um Verschleppungen eines Probenfsuids zu vermeiden

Ganz besonders bevorzugt wird ein Servomotor eingesetzt, welcher über eine geeignete Steuerung verfügt, um mit einer vorbestimmten, insbesondere konstanten Kraft auf die Einspritznadel einwirken zu können. Eine derartige Motorsteuerung wird beispielsweise in der DE 10 2009 022 314 der Anmelderin offenbart.

Alternativ können die Mittel auch als Federelement mit einer geeigneten Federkraft ausgebildet sein. Dadurch lässt sich relativ einfach eine vorbestimmte Kraft auf die Einspritznadel übertragen. Nachteilig ist jedoch, dass die Handhabungsvorrichtung zusätzlich zur Feder über eine Vorrichtung verfügen muss, mit der sich die Einspritznadel in die Führungsbohrung einführen lässt. Zudem nimmt die Federkraft einer Feder als Verschleisserscheinung mit der Zeit ab, wodurch nur für eine gewisse Zeit eine gleich grosse vorbestimmte Kraft durch eine Feder erzeugt werden kann.

Bevorzugt ist die Handhabungsvorrichtung in mindestens einer weiteren Raumrichtung, die orthogonal zur ersten Raumrichtung steht, verfahrbar.

Dadurch kann die Einspritznadel durch die Handhabungsvorrichtung nicht nur in die Führungsbohrung ein- und wieder ausgeführt werden, sondern auch zu mindestens einer weiteren Position gefahren werden. Dies ermöglicht z.B, das Positionieren der Einspritznadel über einen Probenbehälter zum Aufziehen einer Fluidprobe.

Besonders bevorzugt ist die Handhabungsvorrichtung derart ausgelegt, dass die Injektionsnadel in alle drei Raumrichtungen bewegt werden kann. Hierbei kann die Handhabungsvorrichtung insbesondere als XYZ-Pipettierroboter ausgestaltet sein. Dadurch wird es z.B. möglich, unterschiedliche Fluidproben aus einer Mikrotiterplatte nacheinander in die Injektionsnadel aufzuziehen und in ein Analysegerät einzuspritzen. Ferner kann die Injektionsnadel auch in eine Spülposition verfahren werden, bei der die Injektionsnadel mit einer Spüllösung gereinigt werden kann. Alternativ kann die Handhabungsvorrichtung auch derart ausgestaltet sein, dass die Einspritznadel zusätzlich um wenigstens eine Achse geschwenkt werden kann.

Ein weiterer Aspekt der vorliegenden Erfindung betrifft ein Verfahren zum Einspritzen eines Fluids in ein Analysegerät mit einer Einspritzöffnung, insbesondere mit einer erfindungsgemässen Anordnung.

Das erfindungsgemässe Verfahren umfasst als ersten Schritt das Anordnen einer Dichtung mit einer axialen Führungsbohrung auf die Einspritzöffnung, insbesondere auf einem Einspritzventil eines Analysegeräts. Die Führungsbohrung weist einen ersten Abschnitt mit einem ersten Durchmesser sowie einen Absatz mit einer Öffnung mit einem zweiten Durchmesser, der kleiner ist als der erste Durchmesser, auf.

In einem nächsten Schritt wird eine Einspritznadel mit einem Aussendurchmesser, der im Wesentlichen dem ersten Durchmesser der Führungsbohrung entspricht, in den ersten Abschnitt der Führungsbohrung bis zum Anschlag des vorderen Endes der Einspritznadel auf den Absatz eingeführt.

Die Einspritzadel wird anschliessend mit einer vorbestimmten Kraft auf den Absatz gedrückt und das Fluid wird aus der Einspritznadel in die Einspritzöffnung eingespritzt.

Durch das erfindungsgemässe Verfahren lässt sich auf einfache Weise eine hohe Dichtwirkung erzeugen, insbesondere bei automatischen Einspritzsystemen, bei denen mehrere Fluidproben zeitlich gestaffelt mit derselben Einspritznadel eingespritzt werden. Durch das Aufdrücken der Einspritznadel auf den Absatz findet eine Abdichtung am vorderen Ende der Einspritznadel statt, ohne dass zwischen der Einspritznadel und der Einspritzöffnung ein Totvolumen entstehen kann. Dies führt dazu, dass zwischen zwei Fluidproben so gut wie keine Materialverschleppung stattfindet.

Bevorzugt beträgt die vorbestimmte Kraft von 1 N bis 50 N, bevorzugt von 15 N bis 25 N. Es hat sich herausgestellt, dass durch das Aufdrücken der Einspritznadel mit einer Kraft in diesem Bereich eine besonders hohe Dichtwirkung erreicht werden kann, ohne dass die Einspritznadel oder die Dichtung durch die Krafteinwirkung beschädigt werden.

Die Dichtung wird vorzugsweise durch Anbringen einer Halterung, insbesondere durch einen Injektionsport, auf der Einspritzöffnung fixiert und durch diese Halterung auf die Einspritzöffnung gedrückt.

Dadurch wird sichergestellt, dass die Dichtung einen sicheren Sitz auf der Einspritzöffnung aufweist und mit dieser dicht verbunden ist. Besonders bevorzugt wird die Halterung auf das Analysegerät aufgeschraubt. Dies erlaubt einen besonders guten Sitz mit einer grossen Dichtwirkung zwischen der Dichtung und der Einspritzöffnung.

Alternativ kann die Dichtung auch durch andere Mittel auf der Einspritzöffnung gehalten werden, z.B. kann die Dichtung durch ein an ihrer Aussenfläche angebrachtes Gewinde in eine entsprechende Aufnahme eines Analysegeräts direkt eingeschraubt werden.

Ein weiterer Aspekt der vorliegenden Erfindung betrifft ein Analysegerät mit einer Einspritzöffnung, insbesondere mit einem Einspritzventil für ein Fluid mit mindestens einer erfindungsgemässen Anordnung. Ein Vorteil eines derartigen Analysegeräts ist, dass es sehr einfach in einer automatisierten Anlage eingesetzt werden kann.

Bevorzugt weist das Analysegerät im Bereich der Einspritzöffnung eine Aufnahme auf, in die die Dichtung derart eingesetzt werden kann, dass die Führungsbohrung koaxial mit der Einspritzöffnung angeordnet ist.

Dadurch kann sichergestellt werden, dass die Dichtung möglichst einfach und schnell ausgewechselt werden kann, ohne dass eine aufwändige Ausrichtung der Führungsbohrung auf die Einspritzöffnung erfolgen muss.

Weiter bevorzugt verfügt das Analysegerät über Befestigungsmittel für eine Halterung, mit der die Dichtung auf der Einspritzöffnung fixiert werden kann. Besonders bevorzugt ist die Halterung derart ausgestaltet, dass diese die Dichtung mit einer Kraft beaufschlagt, welche zu einer Abdichtung zwischen der Dichtung und einem Bereich des Analysegeräts, der die Einspritzöffnung unmittelbar umgibt, führt.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: Ein Schnittbild durch eine in eine Aufnahme eingesetzte Dichtung,
- Fig. 2: ein Schnittbild durch eine erfindungsgemässe Anordnung,
- Fig. 3: eine perspektivische Darstellung einer Dichtung, und
- Fig. 4: einen horizontalen Schnitt durch eine Dichtung im Bereich des ersten Abschnitts.

Grundsätzlich sind in den Figuren gleiche Teile mit gleichen Bezugszeichen versehen.

### Wege zur Ausführung der Erfindung

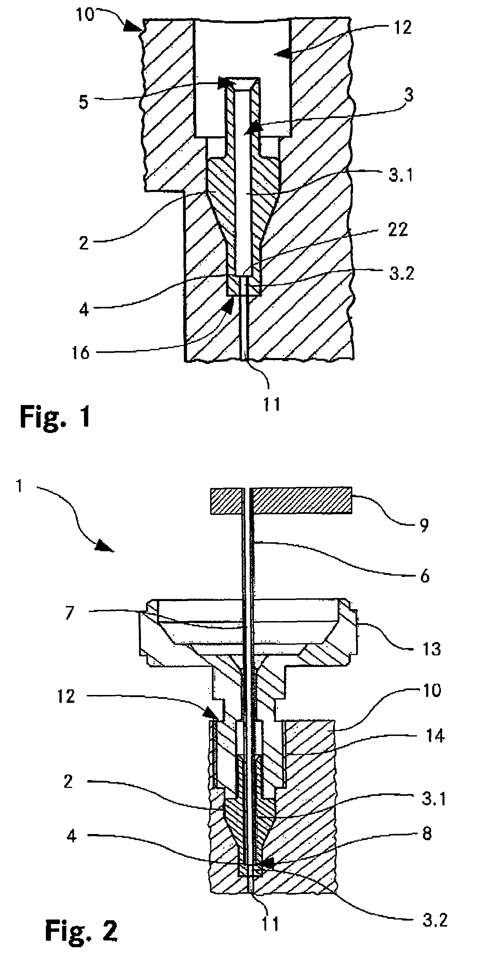

Die Figur 1 zeigt ein Schnittbild einer Dichtung 2, welche in eine Ausnehmung 12 eines Analysegeräts 10 eingesetzt ist. Die Dichtung 2 verfügt über eine axiale Führungsbohrung 3, welche sich von einem ersten Ende 5 in axialer Richtung zu einem zweiten Ende 16 der Dichtung 2 hin erstreckt. Innerhalb der Führungsbohrung 3 ist ein Absatz 4 mit einer Öffnung 22 angeordnet. In einem ersten Abschnitt 3.1, der sich vom Absatz 4 in Richtung des ersten Endes 5 der Dichtung 2 erstreckt, weist die Führungsbohrung 3 einen ersten Durchmesser auf, der grösser ist als der Durchmesser der Öffnung 22. In einem zweiten Abschnitt 3.2, der sich vom Absatz in Richtung des zweiten Endes 16 der Dichtung 2 hin erstreckt, weist die Führungsbohrung 3 einen zweiten Durchmesser auf, der dem Durchmesser der Öffnung 22 entspricht. Die Ausnehmung 12 ist derart ausgestaltet, dass die Führungsbohrung 3 bei eingesetzter Dichtung 2 koaxial mit einer Einspritzöffnung 11 des Analysegeräts 10 ist.

Um eine präzisere Einführung einer Einspritznadel in die Führungsbohrung 3 zu ermöglichen ist die Führungsbohrung 3 an ihrem ersten Ende 5 trichterförmig ausgebildet. Dadurch kann selbst bei einer nicht ganz exakten Positionierung einer Einspritznadel diese ohne weiteres in die Führungsbohrung 3 eingeführt werden.

Die Figur 2 zeigt eine erfindungsgemasse Anordnung 1 im Schnittbild. In der Führungsbohrung 3 ist im ersten Abschnitt 3.1 eine Einspritznadel 6 eingeführt. Die Einspritznadel 6 ist mit einer Handhabungsvorrichtung 9 verbunden, mit der die Einspritznadel 6 in die Führungsbohrung 3 von dessen ersten Ende 5 her eingeführt werden kann. Die Handhabungsvorrichtung 9 ist derart ausgebildet, dass die Einspritznadel 6 mit ihrem vorderen Ende 8 mit einer vordefinierten, insbesondere konstanten Kraft auf den Absatz 4 gedrückt wird. Durch das Aufdrücken des vorderen Endes 8 der Einspritznadel 6 auf den Absatz 4 erfolgt eine sehr gute, aber dennoch lösbare dichtende Verbindung zwischen der Einspritznadel 6 und der Dichtung 2. Dadurch, dass die Dichtung unmittelbar am vorderen Ende 8 der Einspritznadel erfolgt kann zwischen der Dichtung 2 und der Einspritznadel 6 kein Totvolumen entstehen.

Der Grössenunterschied der Durchmesser im ersten Abschnitt 3.1 der Führungsbohrung 3 sowie der Öffnung 22 ist derart gewählt, dass dieser der doppelten Wandstärke der Einspritznadel 6 entspricht. Dadurch bilden das Lumen 7 der Einspritznadel 6 sowie die Einspritzöffnung 11 des Analysegeräts 10 eine durchgehende Fluidleitung mit konstantem Durchmesser. Dies ermöglicht das Einspritzen eines Fluids in das Analysegerät 10 in einer möglichst laminaren Strömung.

In der gezeigten Ausführungsform ist die Dichtung durch eine Halterung 13, welche als Injektionsport ausgebildet ist, in der Ausnehmung 12 fixiert. Die Halterung 13 ist über ein Gewinde 14 mit dem Analysegerät 10 verbunden. Durch das Gewinde 14 lässt sich durch die Halterung 13 die Dichtung 2 mit einem Druck beaufschlagen, welcher zu einer guten Abdichtung zwischen der Dichtung 2 sowie einem die Einspritzöffnung 11 umgebenden Bereich des Analysegeräts 10 führt.

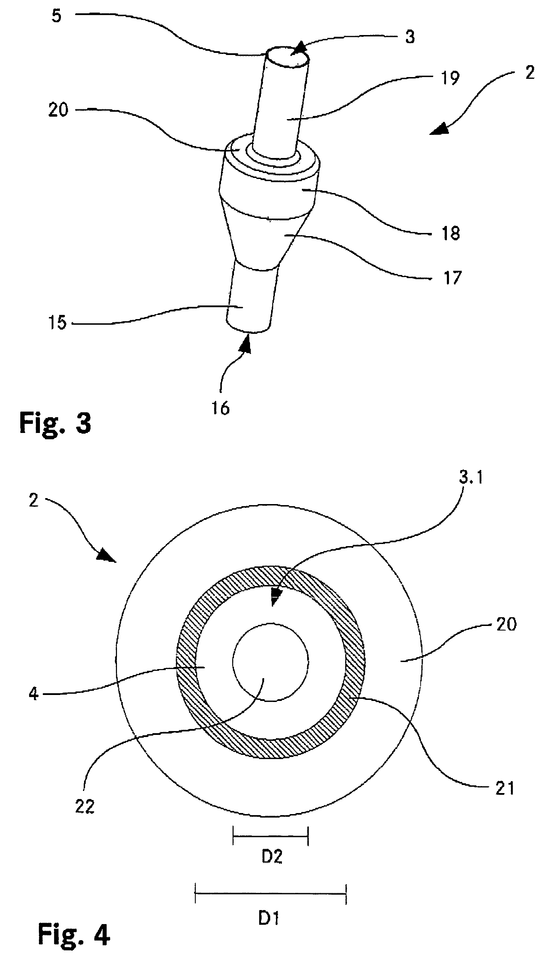

Die Figur 3 zeigt eine perspektivische Ansicht einer Dichtung 2. Die Dichtung 2 weist die Form einer Ferrule auf, wie sie in der Chromatographie üblich und einem Fachmann auf dem Gebiet bekannt ist. Im Bereich des vorderen Endes 16 weist die Dichtung 2 die Form eines Zylinders auf. In Richtung des zweiten Endes weitet sich die Dichtung 2 in einem konischen Bereich aus, welcher in einen zylindrischen Mittelbereich 18 mündet. Der Mittelbereich 18 verfügt über eine Auflagefläche 20, welche in Richtung des ersten Endes 5 ausgerichtet ist. Die Auflagefläche 20 dient als Kontaktfläche der Dichtung 2 zu einer Halterung 13 eines Analysegeräts 10. Im Bereich des ersten Endes 5 ist die Dichtung wiederum in der Form eines Zylinders ausgebildet.

In der Figur 4 ist ein horizontaler Schnitt durch eine Dichtung 2 im ersten Abschnitt 3.1 der Führungsbohrung 3 einer erfindungsgemässen Anordnung 1 gezeigt. Gut ersichtlich sind die Grössenunterschiede des Durchmessers D2 der Öffnung 22 sowie des Durchmessers D1 des ersten Abschnitts 3.1 der Führungsbohrung 3. Der Grössenunterschied der beiden Durchmesser D1 und D2 ist dabei derart gewählt, dass dieser der doppelten Wandstärke der eingesetzten Einspritznadel 6 entspricht. Dadurch wird sichergestellt, dass die Einspritznadel 6 an ihrem vorderen Ende 8 vollständig auf dem Absatz 4 aufliegt. Weiter sind in der Figur 4 auch ein Querschnitt der Wandung 21 der Dichtung 2 sowie eine Aufsicht auf die Auflagefläche 20 sichtbar.

Die Dichtung 2 kann auch eine andere dreidimensionale Form aufweisen, als die in den Ausführungsbeispielen gezeigte Ferrule. Insbesondere kann die Dichtung über ihre ganze Länge als Zylinder ausgestaltet sein. Die Dichtung 2 kann insbesondere an eine herstellerspezifische Form angepasst sein, so dass diese in Aufnahmen 12 von Analysegeräten 10 unterschiedlicher Hersteller eingesetzt werden kann. Ferner kann die Halterung 13 auch in einer anderen Form als den gezeigten Injektionsport vorliegen, z.B. als Madenschraube oder dergleichen.

## Patentansprüche

1. Anordnung zum Einspritzen eines Fluids in ein Analysegerät (10), insbesondere einen Flüssigchromatographen, umfassend eine Handhabungsvorrichtung (9) mit einer Einspritznadel (6) sowie eine Dichtung (2), insbesondere eine Ferrule, aus einem Polymermaterial, welche abnehmbar auf einer Einspritzöffnung (11), insbesondere auf einem Einspritzventil des Analysegeräts angeordnet werden kann und welche in axialer Richtung eine Führungsbohrung (3) zur Aufnahme der Einspritznadel (6) aufweist, wobei die Führungsbohrung (3) derart ausgebildet ist, dass diese einen Absatz (4) mit einer Öffnung (22) umfasst, deren Durchmesser (D2) kleiner ist als ein Durchmesser (D1) in einem ersten Abschnitt (3.1) der Führungsbohrung (3), der sich vom Absatz (4) in Richtung eines ersten Endes (5) der Dichtung (2) hin erstreckt, **dadurch gekennzeichnet, dass** die Handhabungsvorrichtung (9) Mittel aufweist, welche geeignet sind, die Einspritznadel (6) vom ersten Ende (5) der Dichtung (2) her in die Führungsbohrung (3) einzuführen und den vorderen Rand (8) der Einspritznadel (6) mit einer vorbestimmten, insbesondere konstanten Kraft auf den Absatz (4) zu drücken.

2. Anordnung gemäss Anspruch 1, **dadurch gekennzeichnet, dass** die Dichtung (2) aus Polyetheretherketon besteht.

3. Anordnung gemäss einem der Ansprüche 1 oder 2, **dadurch gekennzeichnet, dass** der erste Abschnitt (3.1) der Führungsbohrung (3) einen konstanten Durchmesser (D1) aufweist, der im Wesentlichen einem Aussendurchmesser der Einspritznadel (6) entspricht.

4. Anordnung gemäss einem der Ansprüche 1 bis 3, **dadurch gekennzeichnet, dass** der Durchmesser der Führungsbohrung (3) in einem zweiten Abschnitt (3.2), der sich vom Absatz (4) bis zum zweiten Ende (16) der Dichtung (2), welches bei einer Anordnung der Dichtung (2) auf der Einspritzöffnung (11) auf dieser aufliegt, erstreckt, kleiner ist als der Durchmesser (D1) der Führungsbohrung (3) im ersten Abschnitt (3.1), wobei der Durchmesser der Führungsbohrung (3) des zweiten Abschnitts (3.2) bevorzugt gleich gross ist wie der Durchmesser (D2) der Öffnung (22).

5. Anordnung gemäss einem der Ansprüche 1 bis 4, **dadurch gekennzeichnet, dass** die Führungsbohrung (3) im ersten Abschnitt (3.1) einen Durchmesser (D1) von 0,2 mm bis 2,0 mm, bevorzugt von 0,5 mm bis 0,8 mm aufweist und die Öffnung (22) einen Durchmesser (D2) von 0,1 mm bis 1,8 mm, bevorzugt von 0,2 mm bis 0,6 mm aufweist

6. Anordnung gemäss einem der Ansprüche 1 bis 5, **dadurch gekennzeichnet, dass** die Mittel der Handhabungsvorrichtung (9) derart ausgebildet sind, dass die Einspritznadel (6) mit einer vorbestimmten Kraft von 1 N bis 50 N, bevorzugt von 15 N bis 25 N auf den Absatz (4) gedrückt werden kann.

7. Anordnung gemäss einem der Ansprüche 1 bis 6, **dadurch gekennzeichnet, dass** die Mittel der Handhabungsvorrichtung (9) als Antrieb ausgebildet sind, mit dem die Einspritznadel (6) in einer ersten Raumrichtung, die parallel zur Führungsbohrung (3) ist, bewegbar ist.

8. Anordnung gemäss einem der Ansprüche 1 bis 7, **dadurch gekennzeichnet, dass** die Handhabungsvorrichtung (9) in mindestens einer weiteren Raumrichtung, die orthogonal zur ersten Raumrichtung ist, verfahrbar ist.

9. Verfahren zum Einspritzen eines Fluids in ein Analysegerät (10) mit einer Einspritzöffnung (11), insbesondere mit einer Anordnung (1) gemäss einem der Ansprüche 1 bis 8, umfassend die Schritte:
a) Anordnen einer Dichtung (2) mit einer axialen Führungsbohrung (3) auf die Einspritzöffnung (11), wobei die Führungsbohrung (3) einen ersten Abschnitt (3.1) mit einem ersten Durchmesser (D1) sowie einen Absatz (4) mit einer Öffnung (22) mit einem zweiten Durchmesser (D2), der kleiner ist als der erste Durchmesser (D1), aufweist;
b) Einführen einer Einspritznadel (6) mit einem Aussendurchmesser, der im Wesentlichen dem ersten Durchmesser (D1)der Führungsbohrung (3) entspricht, in den ersten Abschnitt (3.1) der Führungsbohrung (3) bis zum Anschlag des vorderen Endes (8) der Einspritznadel (6) auf den Absatz (4);
c) Drücken der Einspritznadel (6) mit einer vorbestimmten, insbesondere konstanten Kraft auf den Absatz (4);
d) Einspritzen des Fluids in die Einspritzöffnung (11).

10. Verfahren gemäss Anspruch 9, **dadurch gekennzeichnet, dass** die Einspritmadel (3) mit einer vorbestimmten Kraft von 1 N bis 50 N, bevorzugt von 15 N bis 25 N auf den Absatz (4) gedrückt wird.

11. Verfahren gemäss einem der Ansprüche 9 oder 10, **dadurch gekennzeichnet, dass** die Dichtung (2) durch Anbringen einer Halterung (13), insbesondere durch einen Injektionsport, lösbar auf der Einspritzöffnung (11) fixiert und durch diese Halterung (13) auf einen die Einspritzäffnung (11) umliegenden Bereich des Analysegeräts (10) gedrückt wird.

12. Analysegerät mit einer Einspritzöffnung (11), insbesondere mit einem Einspritzventil für ein Fluid mit mindestens einer Anordnung (1) gemäss einem der Ansprüche 1 bis 8.

13. Analysegerät gemäss Anspruch 12, **dadurch gekennzeichnet, dass** das Analysegerät (10) im Bereich der Einspritzöffnung (11) eine Aufnahme (12) aufweist, in die die Dichtung (2) derart eingesetzt werden kann, dass die Führungsbohrung (3) koaxial mit der Einspritzöffnung (11) angeordnet ist.

14. Analysegerät gemäss einem der Ansprüche 12 oder 13, **dadurch gekennzeichnet, dass** das Analysegerät (10) über Befestigungsmittel (34) für eine Halterung (13) verfügt, mit der die Dichtung (2) auf der Einspritzöffnung (11) fixiert werden kann.
